# FASCICULE DE BREVET EUROPEEN

(11) **EP 3 507 193 B1**
(45) Date de publication et mention de la délivrance du brevet: **07.04.2021**
(21) Numéro de dépôt: 17764886.2
(22) Date de dépôt: 29.08.2017
(51) Int. Cl.: B64D 29/08

(54) **ENSEMBLE PROPULSIF D'AÉRONEF**
FLUGZEUGANTRIEBSSYSTEM
AIRCRAFT PROPULSION UNIT

(30) Priorité: 30.08.2016 FR 1658027
(43) Date de publication de la demande: 10.07.2019
(73) Titulaire: Safran Nacelles, 76700 Gonfreville-l'Orcher (FR)
(72) Inventeur: BOILEAU, Patrick, 76700 Gonfreville L'Orcher (FR)
(74) Mandataire: Chevalier, Renaud Philippe
(86) Numéro de dépôt international: PCT/FR2017/052294
(87) Numéro de publication internationale: WO 2018/042117

(56) Documents cités:
- EP-A2- 2 631 181
- US-A- 2 494 347
- US-A- 5 941 061
- US-A- 5 974 783

## Description

La présente invention se rapporte à un ensemble propulsif comprenant une nacelle entourant un turboréacteur. Le document US5941061 décrit un ensemble propulsif pour aéronefs selon le préambule de la revendication 1.

Un aéronef est mû par plusieurs ensembles propulsifs comprenant chacun un turboréacteur logé dans une nacelle abritant également un ensemble de dispositifs d'actionnement annexes liés à son fonctionnement et assurant diverses fonctions lorsque le turboréacteur est en fonctionnement ou à l'arrêt, tel que par exemple, un système d'inversion de poussée.

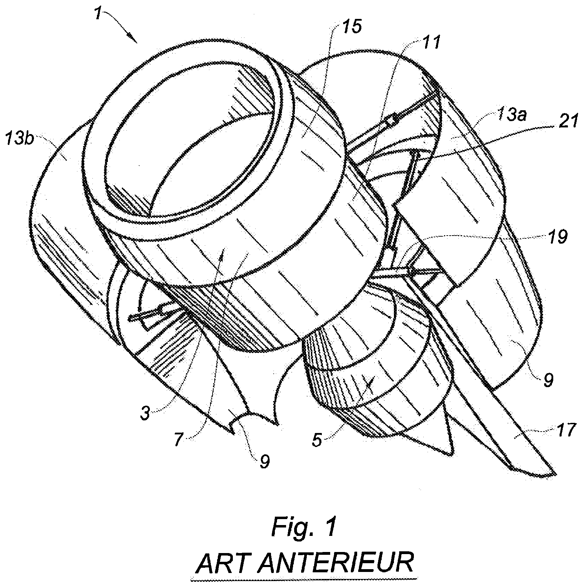

On a représenté à la figure 1 un ensemble propulsif 1 connu en vue isométrique et en position de maintenance.

L'ensemble propulsif 1 comprend une nacelle 3 et un turboréacteur 5. La nacelle 1 présente généralement une structure tubulaire comprenant une entrée d'air 7 en amont du moteur, une section médiane destinée à entourer une soufflante du turboréacteur, et une section aval destinée à entourer la chambre de combustion du turboréacteur et abritant un dispositif d'inversion de poussée.

Le dispositif d'inversion de poussée est, lors de l'atterrissage de l'aéronef, destiné à améliorer la capacité de freinage de celui-ci en redirigeant vers l'avant au moins une partie de la poussée générée par le turboréacteur. Le dispositif d'inversion de poussée comprend notamment des capots 9 mobiles déplaçables entre, d'une part, une position déployée dans laquelle ils ouvrent dans la nacelle un passage destiné au flux dévié, et d'autre part, une position d'escamotage dans laquelle ils ferment ce passage.

La soufflante du turboréacteur se compose essentiellement d'un arbre rotatif portant une pluralité d'aubes. A leur extrémité radiale, les aubes sont entourées circonférentiellement par un carter de soufflante 11.

La nacelle 3 comporte en aval de l'entrée d'air 7 deux demi-capots de soufflante 13a, 13b entourant le carter de soufflante 11 du turboréacteur 5. Chaque demi-capot de soufflante 13a, 13b est sensiblement hémicylindrique, et définissent dans une position fermée (non représentée) une continuité aérodynamique avec une paroi externe 15 de l'entrée d'air 7 de la nacelle 3. Dans cette position de fermeture, les demi-capots de soufflante 13a, 13b sont verrouillés sur une structure fixe ou l'un avec l'autre par un ensemble de verrous, le long d'une ligne de verrouillage longitudinale inférieure dans le cas d'une installation motrice sous voilure.

Comme représenté à la figure 1, les demi-capots de soufflante 13a, 13b peuvent être ouverts radialement par pivotement autour d'une ligne charnière longitudinale supérieure située à proximité d'un axe d'un mât 17 auquel est rattachée la nacelle 5, ceci afin de permettre un accès à certains composants du carter de soufflante 11 lors d'opérations de maintenance. Dans certains types de moteurs, l'ensemble des éléments à maintenir est localisé uniquement au niveau de la zone haute pression du moteur (volume « core » en anglais). Les opérations de maintenance sont alors concentrées au niveau de cette zone du moteur.

Les demi-capots de soufflante 13a, 13b sont ouverts grâce à au moins un actionneur, par exemple un vérin 19, et sont maintenus en position d'ouverture grâce à au moins une bielle 21, l'actionneur et la bielle présentant chacun une première extrémité fixée généralement sur le carter de soufflante 11 du turboréacteur 5, et une seconde extrémité fixée sur le demi-capot. De façon connue, les actionneurs peuvent être réalisés sous forme d'actionneurs hydrauliques.

Dans un tel ensemble propulsif de l'art antérieur, il a été constaté tout d'abord que la présence des demi-capots de soufflante entraîne une diminution du profil laminaire de la paroi externe de la nacelle en contact avec le flux d'air externe, se traduisant par des traînées parasites.

Ensuite, les actionneurs et bielles qui constituent le système d'ouverture et de maintien en position ouverte de maintenance des demi-capots de soufflante présentent une masse importante, qui alourdit la nacelle et qui réduit également par conséquent ses performances aérodynamiques.

Un objectif de la présente invention est de diminuer la masse de la nacelle et de réduire sa traînée en vol, ceci afin d'améliorer ses performances aérodynamiques.

Pour ce faire, la présente invention concerne un ensemble propulsif pour aéronef selon la revendication 1.

Ainsi, en prévoyant une nacelle dont l'entrée d'air est conçue pour définir au moins une portion du capot de soufflante, on augmente par rapport à l'art antérieur la superficie de la partie « lisse » de la paroi externe de la nacelle. On augmente ainsi par rapport à l'art antérieur la laminarité de la paroi externe de la nacelle, ce qui permet de réduire les défauts de surface de la paroi externe de la nacelle.

De plus, le fait de prévoir une entrée d'air conçue pour définir au moins une portion du capot de soufflante, la superficie des capots de soufflante est diminuée par rapport à l'art antérieur. Cela permet de réduire de moitié environ la masse des systèmes d'ouverture de ces capots de soufflante. Alternativement, l'ouverture des capots de soufflante peut aussi se faire manuellement.

Il est ainsi rendu possible grâce à la présente invention de prévoir des capots de soufflantes de dimension largement réduite par rapport à celle de l'art antérieur, ces capots étant montés préférentiellement sur des nacelles supportant un moteur pour lequel les opérations de maintenance sont concentrées au niveau de la zone haute pression du moteur (volume « core » en anglais). En d'autres termes, la nacelle objet de la présente invention est principalement destinée à être montée sur des moteurs dont l'ensemble des éléments à maintenir est localisé au niveau de la zone haute pression du moteur.

Selon des caractéristiques optionnelles de la nacelle selon l'invention :
- le capot de soufflante comprend deux demi-capots de soufflante s'étendant sur une portion circonférentielle de la nacelle comprise entre environ 145° et environ 250° ;
- les demi-capots de soufflante s'étendent sur une portion circonférentielle de la nacelle égale à environ 180°. Les composants du carter de soufflante auxquels les opérateurs accèdent régulièrement lors d'opérations de maintenance sont typiquement des boîtiers localisés de manière assez regroupée sur le carter de soufflante. Ainsi, en prévoyant une nacelle dont les demi-capots de soufflante ne s'étendent que sur une portion circonférentielle de la nacelle égale à environ 180°, l'accès à ces boîtiers peut être assuré en positionnant judicieusement les demi-capots de soufflante dans la nacelle. La masse des demi-capots selon l'invention est ainsi réduite par rapport à l'art antérieur, ce qui permet de s'affranchir de dispositifs d'ouverture et de maintien en position d'ouverture de ces demi-capots, constitués comme on l'a vu précédemment par un ensemble de vérins, de verrous, de charnières et de bielles de maintien, qui alourdissent la nacelle ;
- les deux demi-capots de soufflante sont amovibles ou articulés par rapport à une poutre sommitale de la nacelle ;
- la nacelle comprend un dispositif d'inversion de poussée, en aval du capot de soufflante, et la paroi externe de la partie de l'entrée d'air de la nacelle qui est conçue pour définir au moins une portion du capot de soufflante s'étend jusqu'à un cadre avant dudit dispositif d'inversion de poussée. Cela permet avantageusement d'augmenter la superficie de la partie « lisse » de la paroi externe de la nacelle, et par conséquent d'augmenter la laminarité de la paroi externe de la nacelle en contact avec le flux d'air s'écoulant à l'extérieur de la nacelle ;
le dispositif d'inversion de poussée est du type à grilles, montées translatantes le long d'un axe longitudinal de la nacelle.

Le fait de prévoir une fixation entre l'entrée d'air et le carter de soufflante grâce à des moyens de fixation du type couteau/gorge, au moins au niveau de la partie de l'entrée nacelle qui est conçue pour définir au moins une portion du capot de soufflante, permet d'assurer une bonne tenue mécanique aux efforts longitudinaux tout en permettant un dégagement radial facile .

Selon des caractéristiques optionnelles de cet ensemble propulsif :
- un bord amont du carter de soufflante comprend une bride de fixation adaptée pour assurer la fixation d'un bord aval de la paroi interne de l'entrée d'air;
- l'ensemble propulsif comprend au moins deux dispositifs de verrouillage agencés de façon à assurer une fixation entre les moyens de fixation complémentaires du type couteau/gorge et la bride de fixation du carter de soufflante.

D'autres caractéristiques et avantages de l'invention apparaîtront à la lecture de la description détaillée qui suit pour la compréhension de laquelle on se reportera aux dessins annexés dans lesquels :
- la figure 1 illustre un ensemble propulsif de l'art antérieur, représente en vue isométrique ;
- la figure 2 représente, en coupe longitudinale, la partie supérieure et la partie inférieure de la nacelle d'ensemble selon l'invention, attachée à un carter de soufflante du turboréacteur;
- la figure 3 est une vue de côté de l'ensemble propulsif selon un premier mode de réalisation de l'invention ;
- la figure 4 est une vue de côté de l'ensemble propulsif selon un deuxième mode de réalisation de l'invention ;
- la figure 5 illustre un premier mode de réalisation de la liaison entre la partie supérieure et la partie inférieure de la nacelle de l'invention ;
- la figure 6 illustre un deuxième mode de réalisation de la liaison entre la partie supérieure et la partie inférieure de la nacelle de l'invention.

A noter que dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

En outre, sur l'ensemble des figures, des références identiques ou analogues représentent des organes ou ensembles d'organes identiques ou analogues.

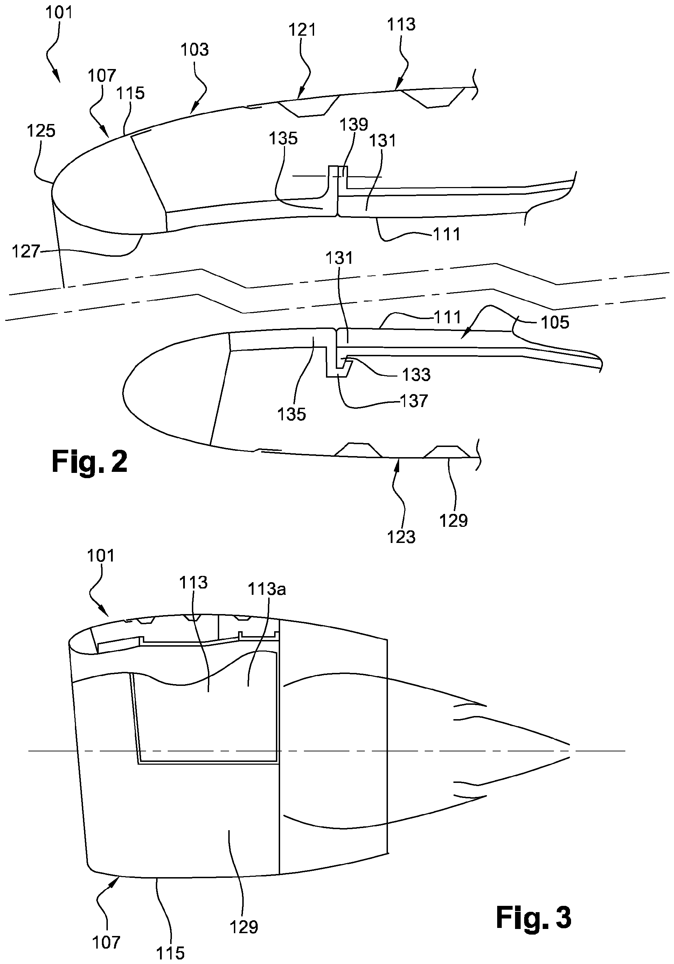

On se réfère à la figure 2 illustrant en coupe longitudinale la partie supérieure 121 et la partie inférieure 123 de la nacelle 103 selon l'invention, montée sur un carter de soufflante 111 d'un turboréacteur 105.

La nacelle 103 comprend une entrée d'air 107 en amont du turboréacteur dont on voit le carter de soufflante 111. L'entrée d'air 107 comprend un bord d'attaque 125, prolongé en aval par une paroi interne 127 et par une paroi externe 115 destinée à venir au contact avec le flux d'air externe s'écoulant autour de la nacelle.

La nacelle 103 comporte, en aval de l'entrée d'air 107, un capot de soufflante 113 qui entoure le carter de soufflante 111 du turboréacteur. Dans une position dite « fermée » représentée à la figure 1, la capot de soufflante 113 définit une continuité aérodynamique avec la paroi externe 115 de la nacelle.

Selon l'invention, l'entrée d'air 107 de la nacelle définit une portion 129 du capot de soufflante 113.

En d'autres termes, et comme on le comprend mieux grâce à la figure 3 représentant l'ensemble propulsif 101 de l'invention en vue de côté, la paroi externe 115 de l'entrée d'air 107 de la nacelle comporte un prolongement vers l'aval de la nacelle, ce prolongement étant défini par la portion 129 de l'entrée d'air entourant le carter de soufflante du turboréacteur.

La paroi externe de la partie de l'entrée d'air 107 qui est conçue pour définir la portion 129 du capot de soufflante s'étend par exemple jusqu'à un cadre avant (non représenté) supportant les grilles de déviation d'un dispositif d'inversion de poussée.

Grâce au prolongement de la paroi externe de l'entrée d'air jusqu'au cadre avant qui supporte les grilles de déviation du dispositif d'inversion de poussée, la superficie de la partie « lisse » de la paroi externe de la nacelle, c'est-à-dire la partie de la paroi externe de la nacelle qui définit une portion du capot de soufflante, est augmentée par rapport à celle de l'art antérieur, ce qui permet d'augmenter par rapport à l'art antérieur la laminarité de la paroi externe de la nacelle en contact avec le flux d'air s'écoulant à l'extérieur de la nacelle.

A noter que le dispositif d'inversion de poussée qu'il est envisagé d'utiliser peut-être un inverseur de poussée à grilles. De manière préférée, les grilles du dispositif d'inversion de poussée sont des grilles montées translatantes le long de l'axe longitudinal de la nacelle.

Le capot de soufflante 113 de l'invention comporte deux demi-capots de soufflante 113a, 113b (seul le demi-capot de soufflante 113a est visible à la figure 3). Ces deux demi-capots peuvent être positionnés sur une portion localisée de la nacelle, qui n'est pas nécessairement une portion selon laquelle les demi-capots sont répartis symétriquement par rapport à un plan longitudinal de la nacelle. Toutefois, en prévoyant de répartir les deux demi-capots symétriquement par rapport à un plan longitudinal de la nacelle, on diminue la traînée aérodynamique par rapport à un autre positionnement sur la nacelle.

Les deux demi-capots de soufflante 113a, 113b sont positionnés sur la circonférence de la nacelle. Ces deux demi-capots s'étendent sur une portion circonférentielle de la nacelle comprise entre environ 145° et environ 250°, ce qui correspond à un pourcentage de la circonférence de la nacelle compris entre environ 40% et environ 80% de la circonférence totale de la nacelle.

De manière préférée, les demi-capots de soufflante 113a, 113b s'étendent sur une portion circonférentielle de la nacelle égale à environ 180°, ce qui correspond à un pourcentage de la circonférence de la nacelle égal à environ 50% de la circonférence totale de la nacelle.

En prévoyant deux demi-capots 113a, 113b qui s'étendent sur une portion circonférentielle de la nacelle comprise entre environ 145° et environ 250°, l'ouverture de ces deux demi-capots peut être faite manuellement, sans avoir recours à un dispositif annexe d'ouverture et de maintien en position ouverte de ces capots.

Les deux demi-capots de soufflante 113a, 113b peuvent être montés sur la nacelle de façon amovible, ou bien ils peuvent être articulés par rapport à une poutre sommitale de la nacelle.

Alternativement, le capot de soufflante de l'invention peut comporter un demi-capot fixe par rapport à la structure environnante de la nacelle et un demi-capot mobile. Le demi-capot fixe peut être maintenu fixe sur l'entrée d'air de la nacelle. On entend par demi-capot mobile un demi-capot agencé pour être facilement démonté puis remonté lorsque les opérations de maintenance sont terminées, ou encore un demi-capot monté articulé sur la nacelle de façon à permettre un accès aux éléments du turboréacteur à maintenir.

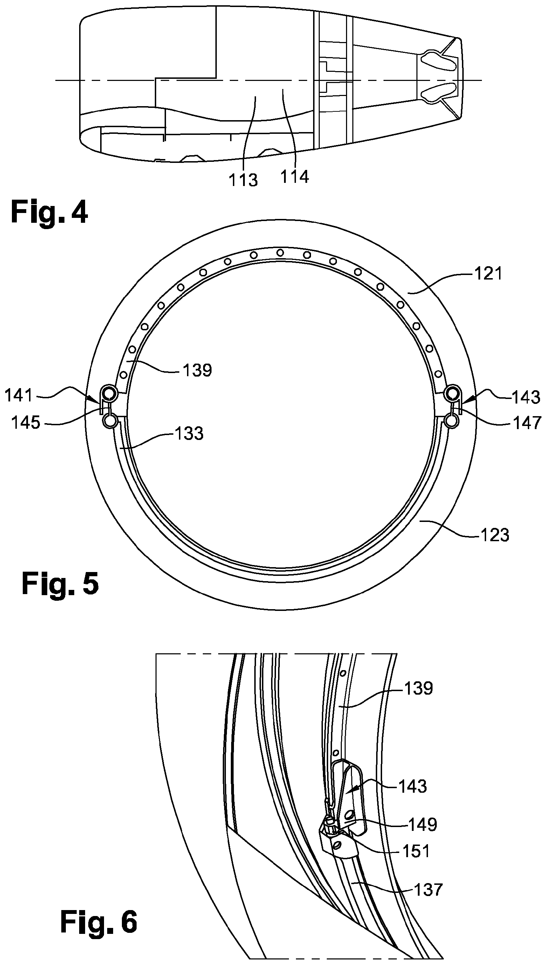

Selon une autre alternative représentée à la figure 4, le capot de soufflante 113 de l'invention peut comporter un capot mobile unique 114, pouvant être agencé pour être facilement démonté puis remonté lorsque les opérations de maintenance sont terminées, ou pouvant être monté articulé sur la nacelle de façon à permettre un accès aux éléments du turboréacteur à maintenir. Ce type de nacelle peut notamment être utilisé dans un ensemble propulsif monté à l'arrière du fuselage de l'avion, montage souvent destiné à équiper les avions d'affaire.

Quel que soit le type de montage retenu des demi-capots sur la nacelle, l'accès aux zones du carter de soufflante 111 du turboréacteur qui supportent des composants tels que des boîtiers se fait par un opérateur qui démonte manuellement ou ouvre manuellement les demi-capots de soufflante.

En se référant aux figures 2 à 4, afin d'assurer la tenue mécanique de l'entrée d'air 107 de la nacelle 103 sur le carter de soufflante 111 du turboréacteur, la paroi interne 127 de l'entrée d'air et un bord amont 131 du carter de soufflante 111 comprennent des moyens de fixation complémentaires du type couteau/gorge, au niveau de la partie de l'entrée d'air qui définit la portion 129 du capot de soufflante.

A cet effet, le bord amont 131 du carter de soufflante est prolongé par un couteau 133 porté par ledit bord amont, tandis qu'un bord aval 135 de la paroi interne 127 de l'entrée d'air 107 reçoit une gorge 137 périphérique, s'étendant sur toute la circonférence de la partie de l'entrée d'air qui définit la portion 129 du capot de soufflante.

Le couteau 133 est orienté radialement depuis la paroi interne 127 de la nacelle vers la paroi externe 115 de la nacelle. Le couteau 133 coopère avec la gorge 137 radiale, de forme complémentaire à celle du couteau.

De manière générale, la gorge 137 et le couteau 133 présentent chacun un profil en V complémentaire, la gorge étant communément désignée par le terme anglais « V-groove ».

Selon une variante non représentée sur les figures, la tenue mécanique de l'entrée d'air 107 de la nacelle 103 sur le carter de soufflante 111 du turboréacteur peut être assurée grâce à un ensemble de pions, solidaires du bord aval 135 de la paroi interne 127 de la nacelle et répartis sur toute la circonférence de la partie de l'entrée d'air qui définit la portion 129 du capot de soufflante, qui engagent une bride tangentielle solidaire du bord amont 131 du carter de soufflante 111.

Sur la portion du carter de soufflante destinée à être entourée par les capots de soufflante 113a, 113b, le bord amont 131 du carter comprend une bride de fixation 139 adaptée pour assurer la fixation du bord aval 135 de la paroi interne 127 de l'entrée d'air 107.

On se réfère à présent à la figure 5 sur laquelle on a représenté schématiquement la nacelle de l'invention en coupe transversale.

Conformément à l'invention, il est envisagé de prévoir un dispositif de fixation 141, 143 de chaque côté de la nacelle, par exemple dans les positions « 3 heures » et « 9 heures ». Ces deux dispositifs de verrouillage sont agencés pour assurer une fixation entre les moyens de fixation complémentaires du type couteau 133/gorge 137 et la bride de fixation 139 du carter de soufflante.

Les dispositifs de fixation 141, 143 peuvent par exemple être des tendeurs 145, 147 ou des ridoirs, assurant le maintien en tension entre la partie supérieure 121 et la partie inférieure 123 de la nacelle.

Selon une alternative représentée à la figure 6, le dispositif de fixation 141, 143 (seul le dispositif de fixation 143 est représenté) comprend une bride à vis 149 associée à un tirant fileté 151 agencé pour mettre une charge dans l'ensemble couteau 133/gorge 137 (seule la gorge 137 est visible sur cette figure) de manière à garantir le bon positionnement de l'ensemble.

Comme il va de soi, la présente invention ne se limite pas aux seules formes de réalisation de cet ensemble propulsif, décrites ci-dessus uniquement à titre d'exemples illustratifs, mais elle est basé sur les revendications suivantes.

## Revendications

1. Ensemble propulsif (101) pour aéronef, comprenant :
- un turboréacteur (105), comprenant un carter de soufflante (111) entourant une soufflante dudit turboréacteur, et
- une nacelle (103) comprenant une partie supérieure (121) et une partie inférieure (123) entourant ledit turboréacteur et comprenant :
• une entrée d'air (107), comprenant un bord d'attaque (125) de la nacelle prolongé en aval par une paroi interne (127) et par une paroi externe (115) de l'entrée d'air,
• un capot de soufflante (113), définissant dans une position fermée une continuité aérodynamique avec la paroi externe (115) de la nacelle, destiné à entourer un carter de soufflante (111) d'un turboréacteur,
l'entrée d'air (107) étant conçue pour définir au moins une portion (129) du capot de soufflante,
ledit ensemble étant **caractérisé en ce qu'**en partie inférieure (123) de la nacelle, la paroi interne (127) de l'entrée d'air (107) de la nacelle et le carter de soufflante (111) du turboréacteur (105) comprennent des moyens de fixation complémentaires du type couteau (133)/gorge (137), au moins au niveau de la partie de l'entrée d'air (107) de la nacelle qui est conçue pour définir au moins une portion (129) du capot de soufflante et **en ce qu'**en partie supérieure (121) de la nacelle, un bord amont (131) du carter de soufflante (111) comprend une bride de fixation (139) adaptée pour assurer la fixation d'un bord aval (135) de la paroi interne (127) de l'entrée d'air (127).

2. Ensemble propulsif (101) selon la revendication 1, **caractérisé en ce que** le capot de soufflante (113) de la nacelle (103) comprend deux demi-capots (113a, 113b) de soufflante s'étendant sur une portion circonférentielle de la nacelle comprise entre environ 145° et environ 250°.

3. Ensemble propulsif (101) selon la revendication 2, **caractérisé en ce que** les demi-capots de soufflante (113a, 113b) s'étendent sur une portion circonférentielle de la nacelle égale à environ 180°.

4. Ensemble propulsif (101) selon l'une des revendications 2 ou 3, **caractérisé en ce que** les deux demi-capots (113a, 113b) de soufflante sont amovibles ou articulés par rapport à une poutre sommitale de la nacelle.

5. Ensemble propulsif (101) selon l'une quelconque des revendications 1 à 4 dans lequel la nacelle (103) comporte un dispositif d'inversion de poussée en aval du capot de soufflante (113), **caractérisé en ce que** la paroi externe (115) de la partie de l'entrée d'air (107) de la nacelle qui est conçue pour définir au moins une portion (129) du capot de soufflante s'étend jusqu'à un cadre avant dudit dispositif d'inversion de poussée.

6. Ensemble propulsif selon la revendication 5, **caractérisé en ce que** le dispositif d'inversion de poussée est du type à grilles, montées translatantes le long d'un axe longitudinal de la nacelle.

7. Ensemble propulsif (101) selon la revendication 6, **caractérisé en ce qu'**il comprend au moins deux dispositifs de verrouillage (141, 143) agencés de façon à assurer une fixation entre les moyens de fixation complémentaires du type couteau (133)/gorge (137) et la bride de fixation (139) du carter de soufflante (111).

## Patentansprüche

1. Antriebseinheit (101) für ein Luftfahrzeug, umfassend:
- ein Turbostrahltriebwerk (105), umfassend ein Gebläsegehäuse (111), das ein Gebläse des Turbostrahltriebwerks umgibt, und
- eine Gondel (103), umfassend einen oberen Teil (121) und einen unteren Teil (123), die das Turbostrahltriebwerk umgeben, und umfassend:
• einen Lufteintritt (107), umfassend eine Anströmkante (125) der Gondel, die stromabwärts von einer Innenwand (127) und von einer Außenwand (115) des Lufteintritts verlängert wird,
• eine Gebläseabdeckung (113), die in einer geschlossenen Position eine aerodynamische Kontinuität mit der Außenwand (115) der Gondel definiert, die dazu bestimmt ist, ein Gebläsegehäuse (111) eines Turbostrahltriebwerks zu umgeben,
wobei der Lufteintritt (107) so ausgelegt ist, dass er mindestens einen Abschnitt (129) der Gebläseabdeckung definiert,
wobei die Einheit **dadurch gekennzeichnet ist, dass** in dem unteren Teil (123) der Gondel die Innenwand (127) des Lufteintritts (107) der Gondel und das Gebläsegehäuse (111) des Turbostrahltriebwerks (105) komplementäre Befestigungsmittel vom Typ Messer (133) / Nut (137) mindestens auf Höhe des Teils des Lufteintritts (107) der Gondel umfassen, der so ausgelegt ist, dass er mindestens einen Abschnitt (129) der Gebläseabdeckung definiert, und dadurch, dass in dem oberen Teil (121) der Gondel eine Anströmkante (131) des Gebläsegehäuses (111) einen Befestigungsflansch (139) umfasst, der angepasst ist, um die Befestigung einer Anströmkante (135) der Innenwand (127) des Lufteintritts (127) sicherzustellen.

2. Antriebseinheit (101) nach Anspruch 1, **dadurch gekennzeichnet, dass** die Gebläseabdeckung (113) der Gondel (103) zwei Abdeckungshälften (113a, 113b) des Gebläses umfasst, die sich auf einem Umfangsabschnitt der Gondel erstrecken, der zwischen ungefähr 145° und ungefähr 250° beträgt.

3. Antriebseinheit (101) nach Anspruch 2, **dadurch gekennzeichnet, dass** sich die Abdeckungshälften des Gebläses (113a, 113b) auf einem Umfangsabschnitt der Gondel erstrecken, der gleich ungefähr 180° ist.

4. Antriebseinheit (101) nach einem der Ansprüche 2 oder 3, **dadurch gekennzeichnet, dass** die zwei Abdeckungshälften (113a, 113b) des Gebläses abnehmbar sind oder in Bezug auf einen oberen Träger der Gondel gelenkig gelagert sind.

5. Antriebseinheit (101) nach einem der Ansprüche 1 bis 4, wobei die Gondel (103) eine Schubumkehrvorrichtung stromabwärts von der Gebläseabdeckung (113) umfasst, **dadurch gekennzeichnet, dass** sich die Außenwand (115) des Teils des Lufteintritts (107) der Gondel, der so ausgelegt ist, dass er mindestens einen Abschnitt (129) der Gebläseabdeckung definiert, bis zu einem vorderen Rahmen der Schubumkehrvorrichtung erstreckt.

6. Antriebseinheit nach Anspruch 5, **dadurch gekennzeichnet, dass** die Schubumkehrvorrichtung vom Typ mit Gittern ist, die verschiebbar entlang einer Längsachse der Gondel montiert sind.

7. Antriebseinheit (101) nach Anspruch 6, **dadurch gekennzeichnet, dass** sie mindestens zwei Verriegelungsvorrichtungen (141, 143) umfasst, die so angeordnet sind, dass sie eine Befestigung zwischen den komplementären Befestigungsmitteln vom Typ Messer (133) / Nut (137) und dem Befestigungsflansch (139) des Gebläsegehäuses (111) sicherstellen.

## Claims

1. A propulsion unit (101) for an aircraft, comprising:
- a turbojet engine (105), comprising a fan casing (111) surrounding a fan of said turbojet engine, and
- a nacelle (103) comprising an upper portion (121) and a lower portion (123) surrounding said turbojet engine and comprising:
• an air inlet (107), comprising a leading edge (125) of the nacelle extended downstream by an inner wall (127) and by an outer wall (115) of the air inlet,
• a fan cowl (113), defining in a closed position an aerodynamic continuity with the outer wall (115) of the nacelle, intended to surround a fan casing (111) of a turbojet engine,
the air inlet (107) being designed to define at least one portion (129) of the fan cowl,
said assembly being **characterized in that** in the lower portion (123) of the nacelle, the inner wall (127) of the air inlet (107) of the nacelle and the fan casing (111) of the turbojet engine (105) comprise complementary fixing means of the knife (133)/groove (137) type, at least in the vicinity of the portion of the air inlet (107) of the nacelle which is designed to define at least one portion (129) of the fan cowl and **in that** in the upper portion (121) of the nacelle, an upstream edge (131) of the fan casing (111) comprises a fixing flange (139) adapted to ensure the fixing of a downstream edge (135) of the inner wall (127) of the air inlet (127).

2. The propulsion unit (101) according to claim 1, **characterized in that** the fan cowl (113) of the nacelle (103) comprises two fan half-cowls (113a, 113b) extending over a circumferential portion of the nacelle comprised between approximately 145° and approximately 250°.

3. The propulsion unit (101) according to claim 2, **characterized in that** the fan half-cowls (113a, 113b) extend over a circumferential portion of the nacelle equal to approximately 180°.

4. The propulsion unit (101) according to any of claims 2 or 3, **characterized in that** the two fan half-cowls (113a, 113b) are removable or articulated relative to a top beam of the nacelle.

5. The propulsion unit (101) according to any one of claims 1 to 4 wherein the nacelle (103) includes a thrust reverser device downstream of the fan cowl (113), **characterized in that** the outer wall (115) of the portion of the nacelle air inlet (107) which is designed to define at least one portion (129) of the fan cowl extends to a front frame of said thrust reverser device.

6. The propulsion unit according to claim 5, **characterized in that** the thrust reverser device is of the type with cascades, mounted to translate along a longitudinal axis of the nacelle.

7. The propulsion unit (101) according to claim 6, **characterized in that** it comprises at least two locking devices (141, 143) arranged so as to ensure fixation between the complementary fixing means of the knife (133)/groove (137) type and the mounting flange (139) of the fan casing (111).
